# EUROPEAN PATENT APPLICATION

(11) **EP 4 106 061 A1**
(43) Date of publication of application: **21.12.2022**
(21) Application number: 22178769.0
(22) Date of filing: 13.06.2022
(51) Int. Cl.: H01M 8/2475

(54) **A FASTENERLESS FUEL TANK CELL STACK ENCLOSURE**

(30) Priority: 15.06.2021 US 202163210701 P
(71) Applicant: Hydrogenics Corporation, Mississauga, ON L5T 2N6 (CA)
(72) Inventor: HILL, Andrew, Scarborough, M1S 3X6 (CA); GORELIK, Michail, Toronto, M2R 3M9 (CA); PUBRAT, David, Burlington, L7L 4C7 (CA)
(74) Representative: Marks & Clerk LLP

(57) **Abstract**

The present disclosure generally relates to a fuel cell stack enclosure adapted to enclose a fuel cell stack The fuel cell stack enclosure includes an upper cover, a lower cover, and one or more clamping means. The upper cover encloses an upper section of the fuel cell stack and the lower cover encloses a lower section of the fuel cell stack.

## Description

### CROSS-REFERENCE TO RELATED APPLICATIONS

This nonprovisional application claims the benefit and priority, under 35 U.S.C. § 119(e) and any other applicable laws or statutes, to U.S. Provisional Patent Application Serial No. 63/210,701 filed on June 15, 2021, the entire disclosure of which is hereby expressly incorporated herein by reference.

### TECHNICAL FIELD

The present disclosure generally relates to systems and methods for enclosing a fuel cell and/or fuel cell stack in an enclosure to protect the fuel cell and/or fuel cell stack from elements of the weather.

### BACKGROUND

A typical fuel cell is comprised of many components and assemblies that may be compressed and bound with a plurality of other fuel cells into a single stack. A single fuel cell, one of the many repeating units in the fuel cell stack, is also a multi-component assembly.

A fuel cell may produce power as a voltage output. Often, a fuel cell stack is used to multiply the voltage output of a single fuel cell by the number of fuel cells stacked together. For example, a proton exchange membrane (PEM) fuel cell stack may have any number of fuel cells, such as from about 40 to about 400 fuel cells in a stack.

A typical PEM fuel cell may include a membrane electrode assembly (MEA) at the center, a gas diffusion layer (GDL) on either side of the MEA, and a bipolar plate (BPP) on either side of the GDL. The MEA is the component that ultimately enables the electrochemical reaction that generates electricity and/or power. However, the PEM fuel cell needs to be assembled with the aforementioned components to operate in a useful and reliable manner.

Fuel cells or fuel cell stacks often use hydrogen or hydrogen-rich fuel to generate electricity that may power an application, such as an electric motor. The fuel cell or fuel cell stack may generate electricity from electrochemical reactions between hydrogen (fuel) and oxygen (oxidant) in the fuel cell or fuel cell stacks. A fuel cell enclosure can provide a housing for accommodating a fuel cell or a fuel cell stack such that the fuel cell or the fuel cell stack are protected from damage or deterioration that may occur over time.

For example, fuel cell and/or fuel cell stacks may function under different environmental and weather conditions. Typically, fuel cells need to be protected from weather elements such as rain, snow, dust, moisture etc. to perform effectively and last for an extended period of time. Fuel cell and/or fuel cell stacks may be protected and/or covered in enclosures.

Existing enclosures are often large and require placing the fuel cell inside of those large structures. A cover or part of the enclosure is then installed and secured with one or more fasteners. However, this type of enclosure requires that the enclosure be designed based on the size of the fuel cell or fuel cell stack being stored within it.

However, a typical fuel cell stack may have many fuel cell plates and membranes. A fuel cell stack is often compressed at a hydraulic press point such that all fuel cell plates seal against each other without any leaks. Due to individual manufacturing tolerances on the many plates in the fuel cell stack, the overall length and/or height of the finished fuel cell stack may vary considerably. This unpredictable length of any fuel cell stack makes fitting any fuel cell stack within a pre-fabricated weatherproof enclosure challenging.

Described herein are systems and methods to enclose a fuel cell and/or fuel cell stack in an enclosure that protects the fuel cell and/or fuel cell stack from the weather elements. Described herein are systems and methods to enclose a fuel cell and/or fuel cell stack in an enclosure that does not need to be manufactured to precisely fit the length or height of the fuel cell and/or fuel cell stack being protected. The present systems and methods may instead accommodate any length differences of a particular fuel cell or fuel cell stack due to part and/or manufacturing tolerances or variations.

### SUMMARY

Embodiments of the present disclosure are included to meet these and other needs. In one aspect, the present disclosure is directed to a fuel cell stack enclosure for enclosing a fuel cell stack. The fuel cell stack enclosure includes an upper cover enclosing a first section of the fuel cell stack, a lower cover enclosing a second section of the fuel cell stack, and one or more clamping means configured to couple and/or secure the upper cover to the lower cover to enclose the fuel cell stack so that the fuel cell stack is protected from contaminants outside the fuel cell stack enclosure. The upper cover includes an upper cover base and at least two upper faces extending downwardly away from the upper cover base. The lower cover includes a lower cover base and at least two lower faces extending upwardly away from the lower cover base.

The one or more clamping means may be a first clamping bar and a second clamping bar. The upper cover may include a first flanged feature and a second flanged feature, while the lower cover may include a third flanged feature and a fourth flanged feature. The first clamping bar may secure the first flanged feature and the third flanged feature, and the second clamping bar may secure the second flanged feature and the fourth flanged feature. At least one cap may be attached to an end of the first clamping bar or the second clamping bar.

A first flange seal may be positioned between the first and the third flanged feature and a second flange seal may be positioned between the second and the fourth flanged feature.

The present disclosure is also directed to a method of enclosing a fuel cell stack. The method includes positioning an upper cover over a first section of the fuel cell stack, positioning a lower cover over a second section of the fuel cell stack, and sliding at least one clamping bar over a portion of the upper cover and a portion of the lower cover to couple and/or secure the upper cover and the lower cover together. The upper cover includes an upper cover base and at least two upper faces extending downwardly away from the upper cover base. The lower cover includes a lower cover base and at least two lower faces extending downwardly away from the lower cover base.

### BRIEF DESCRIPTION OF THE DRAWINGS

FIG. 1 is a schematic showing two endplates of an enclosure attached to a fuel cell stack.
FIG. 2 is a schematic of an exploded view of an embodiment of a fuel cell stack enclosure.
FIG. 3 is a schematic showing a clamping bar attaching an upper cover and a lower cover of a fuel cell stack enclosure without any fasteners.
FIG. 4 is a schematic showing a seal between the flanged features on an upper cover and a lower cover of a fuel cell stack enclosure
FIG. 5 is a schematic showing a closed fuel cell stack enclosure.

These and other features, aspects, and advantages of the present invention will become better understood when the following detailed description is read with reference to the accompanying drawings described herein. Reference is also made to the accompanying drawings that form a part hereof and in which is shown by way of illustration specific embodiments in which the invention may be practiced. These embodiments are described in sufficient detail to enable those skilled in the art to practice what is claimed and it is to be understood that other embodiments may be utilized and that logical, mechanical, and electrical changes may be made without departing from the spirit and scope of the claims. The following detailed description is, therefore, not to be taken in a limiting sense.

### DETAILED DESCRIPTION

The present disclosure is directed to systems and methods to enclose a fuel cell **103** and/or fuel cell stack **102** in an enclosure **100** that protects the fuel cell **103** and/or fuel cell stack **102** from the weather elements. The present disclosure is further directed to an enclosure **100** that does not need to be produced precisely sized to the fuel cell **103** and/or fuel cell stack **102** being protected. The present disclosure is related to an enclosure **100** that does not require fasteners to protect the fuel cell **103** and/or fuel cell stack **102.**

The fuel cell enclosure **100** or fuel cell stack enclosure **100** includes a top cover **210,** a bottom cover **230,** and clamping bars **310, 320.** The top cover **210** is configured to enclose a first section of the fuel cell **103** and/or fuel cell stack **102** and the bottom cover **230** is configured to enclose a second section of the fuel cell **103** and/or fuel cell stack **102.** The clamping bars **310, 320** are configured to secure the top cover **210** and bottom cover **230** to form the fuel cell enclosure **100** so that the fuel cell **103** and/or fuel cell stack **102** is protected from the weather elements or other contaminants without the use of fasteners.

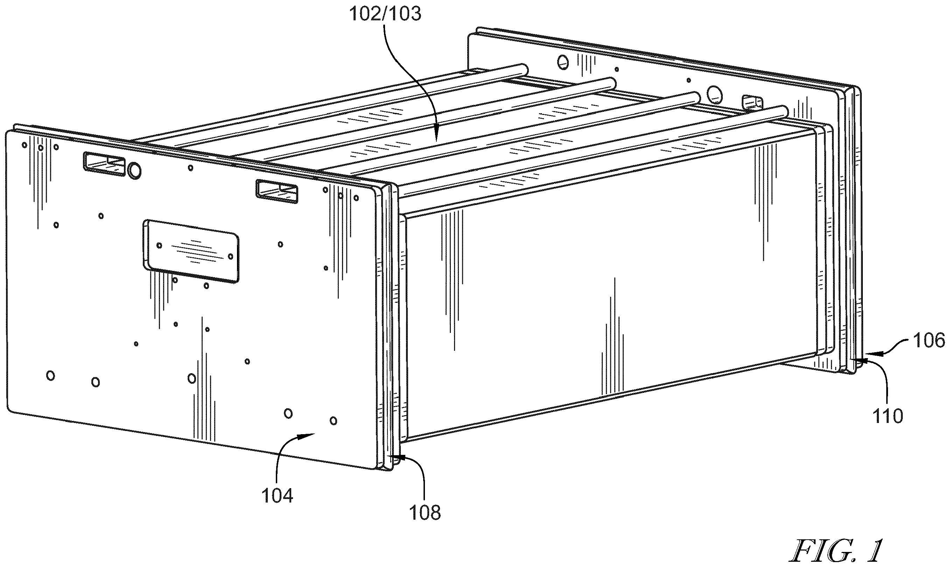

**FIG. 1** shows an embodiment of a fuel cell **103** and/or fuel cell stack 102. This embodiment of the fuel cell **103** and/or fuel cell stack **102** includes two end plates **104** and **106.** The end plates **104** and **106** may be connected to the fuel cell **103** and/or fuel cell stack **102** by any means, including bolts, screws, epoxy, adhesive, etc. In some embodiments, the end plates **104** and **106** may be comprised by the fuel cell enclosure **100** rather than the fuel cell **103** and/or the fuel cell stack **102.**

The fuel cell **103** and/or fuel cell stack **102** also includes at least one seal **108, 110.** Each seal **108, 110** is configured to prevent infiltration of water, moisture, dust, or other contaminants into the fuel cell enclosure **100** and protect the fuel cell **103** and/or fuel cell stack **102** from such contaminants. As shown in **FIG. 1****,** the seals **108** and **110** surround the perimeter of one or both end plates 104 and **106.** The seals **108** and **110** may prevent infiltration of water, moisture, dust or other contaminants into the fuel cell enclosure **100,** such that the fuel cell enclosure **100** is airtight, waterproof, moistureproof, dustproof, etc., and protects the fuel cell **103** and/or the fuel cell stack **102** from contaminants. Each seal **108** and **110** may be made of plastic, rubber, or any other material that can effectively prevent infiltration of water, moisture, dust or other contaminants into the fuel cell enclosure **100.** In some embodiments, the fuel cell **103** and/or fuel cell stack **102** may not include seals **108, 110.**

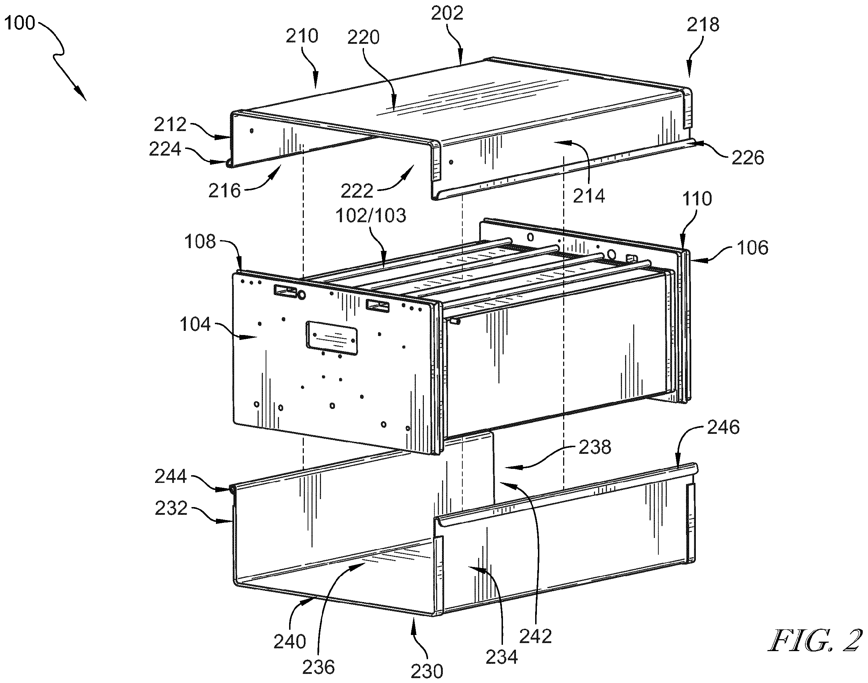

The fuel cell enclosure **100** includes an upper cover **210** and a lower cover **230,** as shown in **FIG. 2****.** The upper cover **210** and the lower cover **230** may be sized to accommodate the fuel cell **103** and/or fuel cell stack **102,** irrespective of the length of the fuel cell **103** and/or fuel cell stack **102,** such as any length variations in a particular fuel cell **103** and/or fuel cell stack **102** design due to part and manufacturing tolerances. The length of the fuel cell **103** and/or fuel cell stack **102** is defined horizontally between the endplates **104** and **106.** The upper cover **210** and the lower cover **230** may be any shape and/or size to encompass the fuel cell **103** and/or the fuel cell stack **102.** In an embodiment, the upper cover **210** and the lower cover **230** may be in the shape of a rectangle or a square.

In an embodiment, the upper cover **210** includes at least two upper faces **212** and **214** and a base **220.** The upper faces **212** and **214** are configured to be coupled with the base **220.** The two upper faces **212** and **214** also extend downwardly away from the base **220.** The two upper faces **212** and **214** are also positioned parallel to each other, as shown in **FIG. 2****.** In other embodiments, the two upper faces **212** and **214** may be positioned in any configuration to adapt to the geometry of the fuel cell **103** and/or the fuel cell stack **102.**

The upper cover **210** further includes open ends **216, 218** and a bottom opening **222.** The sides of the upper cover **210** adjacent to the two upper faces **212** and **214** are open ends **216** and **218,** as shown in **FIG. 2****.** The open ends **216** and **218** are parallel to each other. In other embodiments, the open ends **216** and **218** may be in any configuration to adapt to the geometry of the fuel cell **103** and/or the fuel cell stack **102.** The bottom opening **222** of the upper cover **210** is created by the erection and connection of the two upper faces **212** and **214** to the base **220.** The bottom opening **222** is located opposite to, parallel to, and/or on the underside of the base **220.**

In an embodiment, the lower cover **230** includes at least two lower faces **232** and **234** and a base **240.** The two lower faces **232** and **234** are configured to be coupled to and/or raised from a base **240.** The two lower faces **232** and **234** are positioned to extend upwardly away from the base **240.** The two lower faces **232** and **234** are also positioned parallel to each other, as shown in **FIG. 2****.** In other embodiments, the two lower faces **232** and **234** may be positioned in any configuration to adapt to the geometry of the fuel cell **103** and/or the fuel cell stack **102.**

The lower cover **230** further includes open ends **236, 238** and top opening **242.** The sides of the lower cover **230** adjacent to the two lower faces **232** and **234** are open ends **236** and **238,** as shown in **FIG. 2****.** The open ends **236** and **238** are parallel to each other. In other embodiments, the open ends **236** and **238** may be in any configuration to adapt to the geometry of the fuel cell **103** and/or the fuel cell stack **102.** A top opening **242** of the lower cover **230** is created by the erection and connection of the two lower faces **232** and **234** to the base **240.** The top opening **242** is located opposite to, parallel to, and/or on the topside of the base **240.**

In an embodiment, the open end **236** of the lower cover **230** and the open end **216** of the upper cover **210** is sized according to the end plate **104.** In an embodiment, the open end **236** of the lower cover **230** and the open end **216** of the upper cover **210** may form a waterproof, dustproof and/or moistureproof fitting around the end plate 104. In some embodiments, the open end **236** of the lower cover **230** and the open end **216** of the upper cover **210** may cooperate with and/or compress the seal **108** to form a waterproof, dustproof and/or moistureproof fitting around the end plate 104 of the fuel cell **103** and/or the fuel cell stack **102.** In other embodiments, the open end **236** of the lower cover **230** and the open end **216** of the upper cover **210** may attach to each other and/or enclose the end plate **104** without the use of any fasteners, bolts, screws, adhesives, or other types of fasteners known in the art.

In an embodiment, the open end **238** of the lower cover **230** and the open end **218** of the upper cover **210** is sized according to the end plate **106.** In an embodiment, the open end **238** of the lower cover **230** and the open end **218** of the upper cover **210** may form a waterproof, dustproof and/or moistureproof fitting around the end plate **106.** In some embodiments, the open end **238** of the lower cover **230** and the open end **218** of the upper cover **210** may cooperate with and/or compress the seal **110** to form a waterproof, dustproof and/or moistureproof fitting around the end plate **106** of the fuel cell **103** and/or the fuel cell stack **102.** In other embodiments, the open end **238** of the lower cover **230** and the open end **218** of the upper cover **210** may attach to each other and/or enclose the end plate **106** without the use of any fasteners, bolts, screws, adhesives, or other types of fasteners known in the art.

In an exemplary embodiment, the upper cover **210** and the lower cover **230** may be affixed or attached to each other without the use of any bolts, screws, adhesives, or other types of fasteners to form the fuel cell enclosure **100.** In an embodiment, the covers **210** and **230** may be affixed or attached to the endplates **104** and **106** without the use of any types of fasteners. Therefore, the length of the covers **210** and **230** of the fuel cell enclosure **100** are not limited by or tied to the length or height of the fuel cell **103** and/or fuel cell stack **102** with or without the endplates **104** and **106,** which is advantageous for the fuel cell **103** and/or fuel cell stack **102.** However, in one embodiment of the present disclosure, fasteners may be used to only attach or connect the two covers **210** and **230** together to form the fuel cell enclosure **100.**

In some embodiments, the upper cover **210** and the lower cover **230** may be made of any type of material that is installed around the fuel cell 1**03** and/or fuel cell stack **102.** In some embodiments, the covers **210** and **230** may be made of a heat conducive material. In one embodiment, the upper cover **210** and the lower cover **230** may comprise any type of metal that is installed around the fuel cell **103** and/or fuel cell stack **102.** Referring back to **FIGS. 1** **and** 2, in other embodiments, the upper cover **210** and the lower cover **230** may be configured of any material to compress the seals **108** and **110** on the sides of the end plates **104** and **106** during installation on or around the fuel cell **103** and/or fuel cell stack **102.**

In some embodiments, the upper cover **210** and the lower cover **230** may be made be formed to comprise a clamshell cover **210, 230.** One embodiment of the clamshell covers **210** and **230** of the present enclosure **100** is comprised of one or more sheets of metal that enable direct and secure sealing to the endplates **104** and **106** of fuel cell **103** and/or fuel cell stack **102.** While any thickness of material may be used, in one embodiment, the thickness of the material (e.g., metal) comprising the upper clamshell cover **210** and the lower clamshell cover **230** may range from about 1 mm to about 10 mm, including any specific or range of thicknesses comprised therein. For example, in one embodiment, the thickness of the sheet of material comprising the clamshell covers **210** and **230** is about 2 mm thick.

In an embodiment, the upper cover 210 includes upper flanged features **224** and **226** at the edge of the upper faces **212** and **214** that are not attached to the base **220,** as shown in **FIG. 2****.** In some embodiments, the upper flanged features **224** and **226** may be formed along the entire length of the upper faces **212** and **214.** In some embodiments, the upper flanged features **224** and **226** may be formed along a part of the length of the faces **212** and **214.** In other embodiments, the upper flanged features **224** and **226** may be formed on the outer surface of the upper faces **212** and **214.**

In an embodiment, the lower cover **230** may have lower flanged features **244** and **246** at the edge of the lower faces **232** and **234** that are not attached to the base **240.** In some embodiments, the lower flanged features **244** and **246** may be formed along the entire length of the lower faces 232 and **234.** In some embodiments, the lower flanged features **244** and **246** may be formed along a part of the length of the lower faces 232 and 234. In other embodiments, the lower flanged features **244** and **246** may formed on the outer surface of the lower faces **232** and **234.**

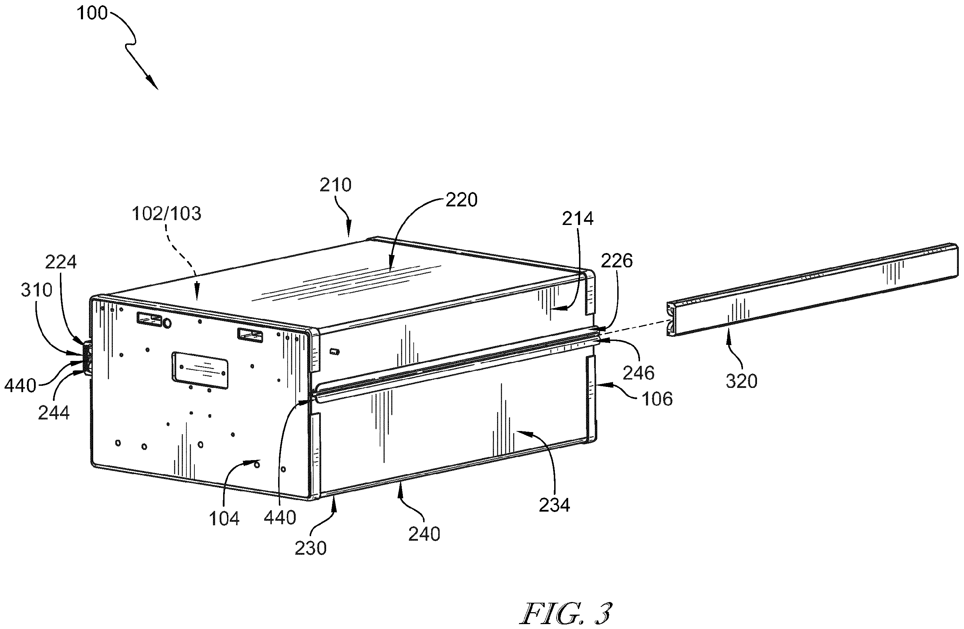

In an embodiment, the lower flanged features **244** and **246** may touch, be in contact with, be secured to and/or be in close proximity to the upper flanged features **224** and **226** when the upper cover **210** and the lower cover **230** are used to enclose the fuel cell **103** and/or fuel cell stack **102.** In some embodiments, as shown in **FIG. 3****,** one or more clamping means **310, 320** may be used to connect the upper cover **210** and the lower cover **230** adjacent to or on two opposite, parallel sides of the fuel cell **103** and/or fuel cell stack **102.** In some embodiments, as shown in **FIG. 3****,** the one or more clamping means **310, 320** may be used to connect the upper flanged features **224** and **226** and the lower flanged features **244** and **246** adjacent to or on two opposite, parallel sides of the fuel cell **103** and/or fuel cell stack **102.**

In some embodiments, as shown in **FIG. 3****,** the one or more clamping means **310, 320** may be clamping bars **310** and **320.** The clamping bars **310** and **320** may be used to slide down and/or connect each side of the enclosure **100** together (e.g., the upper flanged features **224** and **226** and the lower flanged features **244** and **246** together). In another embodiment, the one or more clamping means **310, 320** may be clamping latches (not shown) that may be used to connect and/or clamp each side of enclosure **100** together (e.g., the upper flanged features **224** and **226** and the lower flanged features **244** and **246** together).

Referring to the enclosure **100** shown in **FIGS. 2** and **3****,** a first clamping bar **310** may contact and/or connect the upper flanged feature **224** on the upper cover **210** with the lower flanged feature **244** on the lower cover **230.** A separate, second clamping bar **320** may contact and/or connect the upper flanged feature **226** on the upper cover **210** with the lower flanged feature **246** on the lower cover **230.** In some embodiments, the first and second clamping bars **310** and **320** may attach and/or connect the upper cover **210** to the lower cover **230.** In other embodiments, the clamping bars **310** and **320** may also compress the seals **108** and **110** next to the endplates **104** and **106,** such that the enclosure **100** is closed, sealed, and/or airtight to protect the fuel cell **102** and/or fuel cell stack **103** from contaminants.

In an embodiment, because there are no fastener connections between the upper cover **210,** the lower cover **230,** and/or the endplates **104** and **106,** a single set of covers **210** and **230** may be made to enclose different fuel cell **103** and/or fuel cell stack **102** lengths and/or different fuel cell **103** and/or fuel cell stack **102** models or types. In some embodiments, the upper cover **210** and the lower cover **230** may be made to be longer than the length required by the fuel cell **103** and/or fuel cell stack **102.** In other embodiments, the upper cover **210** and the lower cover **230** may be longer than the length of the fuel cell **103** and/or fuel cell stack **102** with the endplates **104** and **106,** such that the upper cover **210** and the lower cover **230** may overhang the endplates **104** and **106** of the fuel cell **103** and/or fuel cell stack **102** when the length (e.g., height) of the fuel cell and/or fuel cell stack **102** being enclosed is shorter than the nominal length of the fuel cell **103** and/or fuel cell stack **102** that the enclosure **200** was manufactured to envelope or enclose. In some embodiments, the upper cover **210** and the lower cover **230** may overhang the endplates **104** and **106** of the fuel cell **103** and/or fuel cell stack **102** such that the covers **210** and **230** make contact and/or touch other components in the fuel cell **103** and/or fuel cell stack **102,** and/or a fuel cell system (not shown).

The fuel cell **103** and/or fuel cell stack **102** length varies by type and manufacturer. However, the upper cover **210** and the lower cover **230** of the enclosure **100** may generally be sized from about 100% to about 110% of the size of the fuel cell **103** and/or fuel cell stack **102,** including any specific or range of length comprised therein (e.g., about 105% greater). The length of the fuel cell **103** and/or fuel cell stack **102** is sometimes referred to as the height of the fuel cell **103** and/or fuel cell stack **102** when the fuel cell stack is oriented vertically on a hydraulic press during its build or manufacturing.

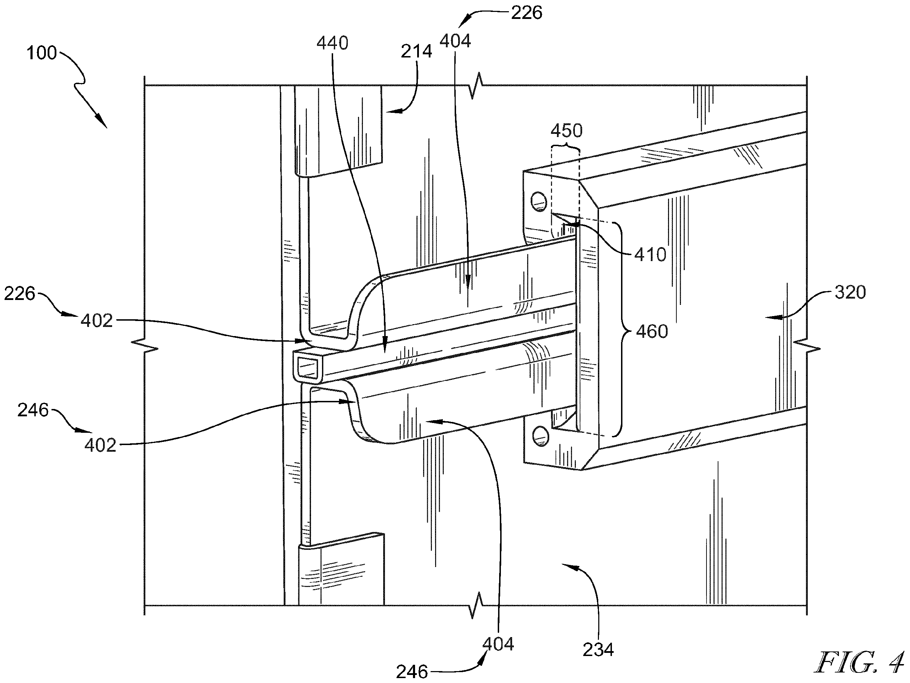

The enclosure **100** may also include on or more flange seals **440.** In an embodiment of the enclosure **100,** as shown in **FIGS. 3** and **4****,** the one or more flange seals **440** may be present between the upper and lower flanged features **224** and **244** and between the upper and lower flanged features **226** and **246,** respectively. The one or more flange seals **440** may be a part of the upper cover **210,** the lower cover **230,** the clamping bars **310, 320** and/or may be a separate component of the enclosure **100** that slides in between the upper and lower flanged features **224** and **244** and/or the upper and lower flanged features **226** and **246.** The one or more flange seals **440** may be made of plastic, rubber, combinations thereof, or any other material that can effectively prevent infiltration of water, moisture, dust or other contaminants into the enclosure 100 of the fuel cell **103** and/or fuel cell stack **102.** The one or more flange seals **440** may also be a solid seal or a hollow seal, such as the embodiment shown in **FIG. 4****.**

Each of the upper and lower flanged features **224, 226, 244,** and **246** may include one or more vertical faces **404** and/or one or more horizontal faces **402.** In one exemplary embodiment of the enclosure **100,** the upper and lower flanged features **224, 226, 244, 246** include one or more vertical faces **404.** In another embodiment, the upper and lower flanged features **224, 226, 244, 246** may have one or more horizontal faces **402.** In a further embodiment, the upper and lower flanged features **224, 226, 244, 246** may have one or more horizontal faces **402** and one or more vertical faces **404** that are connected or attached at an angle to each other as shown in **FIG. 4****.**

For example, as shown in **FIG. 4****,** the one or more horizontal faces **402** of upper flanged feature **226** may be coupled to and extend outwardly away from the upper face **214,** and the one or more vertical faces **404** may be coupled to and extend upwardly away from the one or more horizontal faces **402.** The one or more horizontal faces **402** may be coupled at the edge of the upper face **214** that is not attached to the base **220.** The one or more vertical faces **404** may be coupled at the edge of the one or more horizontal faces **402** that is not attached to the upper face **214.** The one or more horizontal faces **402** and/or the one or more vertical faces **404** of upper flanged feature **224** may have the same orientation as the one or more horizontal faces **402** and/or the one or more vertical faces of upper flanged feature **226.**

Likewise, as shown in **FIG. 4****,** the one or more horizontal faces **402** of lower flanged feature **246** may be coupled to and extend outwardly away from the lower face **234,** and the one or more vertical faces **404** may be coupled to and extend downwardly away from the one or more horizontal faces **402.** The one or more horizontal faces **402** may be coupled at the edge of the lower face **234** that is not attached to the base **220.** The one or more vertical faces **404** may be coupled at the edge of the one or more horizontal faces **402** that is not attached to the lower face **234.** The one or more horizontal faces **402** and/or the one or more vertical faces **404** of lower flanged feature **244** may have the same orientation as the one or more horizontal faces **402** and/or the one or more vertical faces of lower flanged feature **246.**

The flange seal **440** may be inserted between the horizontal faces **402** of the two flanged features on the same side of the fuel cell stack enclosure **100** (e.g., between **226** and **246** and/or between **224** and **244).** The clamping bars **310** and **320** may have an opening 410 designed to securely and/or tightly fit around the set of flanged features **224** and **244** and/or **226** and **246,** such that the upper cover **210** and lower cover **230** are secured together around the fuel cell **103** and/or fuel cell stack **102.**

The width **450** of the opening **410** of the clamping bars **310** and **320** may be sized to fit the vertical faces **404** of the flanged features **224, 226, 244, 246.** The height **460** of the opening **410** of the clamping bars **310** and **320** may be sized to fit the vertical faces **404** of the flanged features **224, 226, 244, 246.** In other embodiments, the flanged features **224, 226, 244, 246** and the opening **410** of each of the clamping bars **310** and **320** may be shaped differently and in any way that secures and or fastens the upper cover **210** to the lower cover **230,** such that it is sealed.

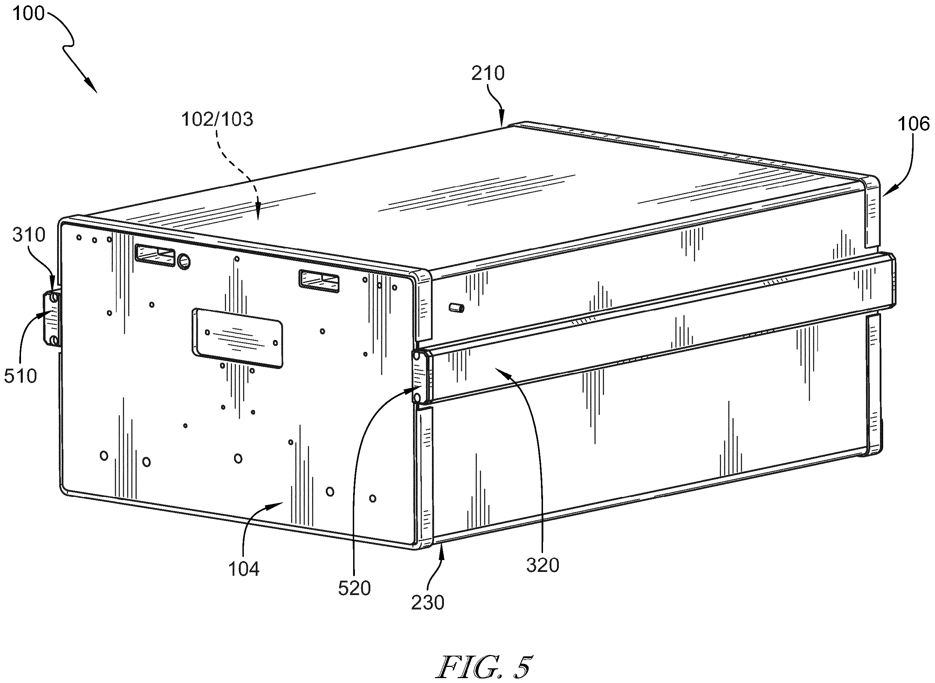

In an embodiment shown in **FIG. 5****,** one or both ends of clamping bars **310** or **320** may be attached to a cap **510** and **520.** In some embodiments, the caps **510, 520** may prevent the clamping bars **310, 320** from disengaging and/or detaching from the upper cover **210** and/or the lower cover **230** during any physical disruption, such as movement, shock, and/or vibrations experienced by the fuel cell **103** and/or fuel cell stack **102,** such as during mobile applications.

In an embodiment, the fuel cell stack enclosure **100** may provide a protective weatherproof compartment for the fuel cell **103** and/or fuel cell stack **102.** In some embodiments, the fuel cell stack enclosure 100 may be configured to be a volumetrically efficient and compact means of protecting the fuel cell **103** and/or fuel cell stack **102** (e.g. waterproofing or weatherproofing). This enclosure **100** may also allow the enclosed fuel cell **103** and/or fuel cell stack **102** to be integrated into tight spaces where other fuel cell products may not fit and therefore are less volumetrically compact.

In an embodiment, a method of enclosing a fuel cell **103** and/or fuel stack **102** may comprise using a fuel cell stack enclosure **100** that does not require and/or use fasteners to attach the upper cover **210** to the lower cover **230.** In some embodiments, the fuel stack enclosure **100** may comprise a cover **210** and a lower cover **230** with flanged features **224, 226, 244, 246** and/or one or more clamping bars **310** and **320.** The upper cover **210** and the lower cover **230** may be sized to any dimensions and not restricted to be the dimensions (e.g., length and/or height) of the fuel cell **103** and/or fuel stack **102** being enclosed. In some embodiments, a method of enclosing a fuel cell **103** and/or fuel stack **102** without fasteners that may comprise using a fuel cell stack enclosure **100** may protect the fuel cell **103** and/or fuel cell stack **102** from water, dust, and/or moisture.

Notably, in the present system and methods, the covers **210** and **230** of the fuel cell stack enclosure **100** are not manufactured to be tied or fitted to the length of the fuel cell **103** and/or fuel cell stack **102.** However, in some exemplary embodiments, the covers **210** and **230** are still manufactured to fit the other fuel cell **103** and/or fuel cell stack **103** dimensions (width, depth, etc.). Moreover, in some illustrative embodiments of the present the fuel cell stack enclosure **100,** the covers **210** and **230** are specifically required to fit one, more, or all of the other fuel cell **103** and/or fuel cell stack **102** dimensions (width, depth, etc.) excluding its length or height, which provides a commercially advantageous ability to produce an enclosure **100** that is designed to fit a wide array and variety of commercial fuel cells **103** and/or fuel cell stacks **102** provided by different manufacturers, while also enhancing the performance and extending the life and duration of the enclosed fuel cell **103** and/or fuel cell stack **102.**

The following described aspects of the present invention are contemplated and non-limiting.

A first aspect of the present invention relates to a fuel cell stack enclosure to enclose a fuel cell stack. The fuel cell stack enclosure includes an upper cover enclosing a first section of the fuel cell stack, a lower cover enclosing a second section of the fuel cell stack, and one or more clamping means configured to couple and/or secure the upper cover to the lower cover to enclose the fuel cell stack so that the fuel cell stack is protected from contaminants outside the fuel cell stack enclosure. The upper cover includes an upper cover base and at least two upper faces extending downwardly away from the upper cover base. The lower cover includes a lower cover base and at least two lower faces extending upwardly away from the lower cover base.

A second aspect of the present invention relates to a method of enclosing a fuel cell stack. The method includes positioning an upper cover over a first section of the fuel cell stack, positioning a lower cover over a second section of the fuel cell stack, and sliding at least one clamping bar over a portion of the upper cover and a portion of the lower cover to couple and/or secure the upper cover and the lower cover together. The upper cover includes an upper cover base and at least two upper faces extending downwardly away from the upper cover base. The lower cover includes a lower cover base and at least two lower faces extending downwardly away from the lower cover base.

In the first and second aspect of the present invention, the first section may be an upper section and/or the second section may be a lower section. The fuel cell stack may include at least one end plate. The at least one end plate may have an outer perimeter and/or may include a seal surrounding the outer perimeter. The at least one end plate may be a first end plate and a second end plate, and the seal may be a first seal of the first end plate and a second seal of the second end plate. The at least one seal may be made of plastic, rubber, or any other material that can effectively prevent infiltration of water, moisture, dust, or other contaminants into the fuel cell stack enclosure.

In the first and second aspect of the present invention, the upper cover may include a first flanged feature and a second flanged feature. The first flanged feature may be attached to an edge of a first upper face of the at least two upper faces opposite an edge of the first upper face attached to the upper cover base. The second flanged feature may be attached to an edge of a second upper face of the at least two upper faces opposite an edge of the second upper face attached to the upper cover base. The first flanged feature and/or the second flanged feature may extend along at least a portion of an edge of one of the at least two upper faces of the upper cover. The first flanged feature and/or the second flanged feature may include at least one horizontal face extending away from one of the at least two upper faces and at least one vertical face extending upwardly away from the at least one horizontal face.

In the first and second aspect of the present invention, the at least two upper faces may be parallel to each other.

In the first and second aspect of the present invention, the upper cover may include open ends and a bottom opening. The open ends may be parallel to each other. The bottom opening may be created by the erection and connection of the at least two upper faces to the upper cover base.

In the first and second aspect of the present invention, the lower cover may include a third flanged feature and a fourth flanged feature. The third flanged feature may be attached to an edge of a first lower face of the at least two lower faces opposite an edge of the first lower face attached to the lower cover base. The fourth flanged feature may be attached to an edge of a second lower face of the at least two lower faces opposite an edge of the second lower face attached to the lower cover base. The third flanged feature and/or the fourth flanged feature may extend along at least a portion of an edge of one of the at least two lower faces of the lower cover. The third flanged feature and/or the fourth flanged feature may include includes at least one horizontal face extending away from one of the at least two lower faces and at least one vertical face extending downwardly away from the at least one horizontal face

In the first and second aspect of the present invention, the at least two lower faces may be parallel to each other.

In the first and second aspect of the present invention, the upper cover may include open ends and a top opening. The open ends may be parallel to each other. The top opening may be created by the erection and connection of the at least two upper faces to the upper cover base.

In the first and second aspect of the present invention, at least one of the open ends of the upper cover and at least one of the open ends of the lower cover may be sized according to one of the at least one end plate of the fuel cell stack to form a waterproof, dustproof and/or moistureproof fitting around the at least one end plate and/or may cooperate with and/or compress the seal to form the waterproof, dustproof and/or moistureproof fitting around the at least one end plate.

In the first and second aspect of the present invention, the one or more clamping means and/or the at least one clamping bar may be a first clamping bar and a second clamping bar.

In the first and second aspect of the present invention, the first and third flanged features may be coupled and/or secured together with the first clamping bar and the second and fourth flanged features may be coupled and/or secured together with the second clamping bar.

In the first and second aspect of the present invention, the first clamping bar and/or the at least one clamping bar may include an opening sized to receive at least a portion of both the first flanged feature and the third flanged feature, and/or the at least one vertical face of the first flanged feature and the at least one vertical face of the third flanged feature. The portion of both the first flanged feature and the third flanged feature may be the at least one vertical face of the first flanged feature and the at least one vertical face of the third flanged feature. The opening of the first clamping bar and/or the at least one clamping bar may have a width and/or a height sized to fit the at least one vertical face of the first flanged feature and the at least one vertical face of the third flanged feature.

In the first and second aspect of the present invention, the second clamping bar and/or the at least one clamping bar may include an opening sized to receive at least a portion of both the second flanged feature and the fourth flanged feature, and/or the at least one vertical face of the second flanged feature and the at least one vertical face of the fourth flanged feature. The portion of both the second flanged feature and the fourth flanged feature may be the at least one vertical face of the second flanged feature and the at least one vertical face of the fourth flanged feature. The opening of the second clamping bar and/or the at least one clamping bar may have a width and/or a height sized to fit the at least one vertical face of the second flanged feature and the at least one vertical face of the fourth flanged feature.

In the first and second aspect of the present invention, the fuel cell stack enclosure may further include a first and second flange seal. The first flange seal may be positioned between the first and third flanged features, and the second flange seal may be positioned between the second and fourth flanged features. The first flange seal and/or the second flange seal may be made of plastic, rubber, combinations thereof, or any other material that can effectively prevent infiltration of water, moisture, dust or other contaminants into the enclosure. The first flange seal and/or the second flange seal may be a solid seal and/or a hollow seal. The first flange seal and/or the second flange seal may be inserted between the at least one horizontal face of the first flanged feature and the at least one horizontal face of the third flanged feature and/or the at least one horizontal face of the second flanged feature and the at least one horizontal face of the third flanged feature.

In the first and second aspect of the present invention, at least one cap may be attached to an end of one of the at least one clamping bar and/or first clamping bar and/or the second clamping bar. The at least one cap may prevent the at least one clamping bar and/or the first clamping bar and/or the second clamping bar from disengaging and/or detaching from the upper cover and/or the lower cover.

In the first and second aspect of the present invention, the upper cover, the lower cover, and the one or more clamping means and/or the at least one clamping bar may cooperate to enclose the outer perimeter of the at least one end plate and/or compress the seal surrounding the outer perimeter of the at least one end plate.

In the first and second aspect of the present invention, the upper cover and the lower cover may be made of a heat conductive material and/or any type of metal that is installed around the fuel cell stack.

In the first and second aspect of the present invention, the upper cover and the lower cover may be longer than the length of the fuel cell stack and/or the fuel cell stack with the at least one end plate.

In the first aspect of the present invention, the one or more clamping means may be clamping latches that may be used to connect and/or clamp the first flanged feature and the third flanged feature together and/or the second flanged feature and the fourth flanged feature together.

In the second aspect of the present invention, the method may further include positioning at least one flange seal between the upper cover and the lower cover.

In the second aspect of the present invention, the method may further include compressing the first flanged feature, the first flange seal, and the third flanged feature together with one of the at least one clamping bar.

In the second aspect of the present invention, the method may further include compressing the second flanged feature, the second flange seal, and the fourth flanged feature together with another of the at least one clamping bar.

The features illustrated or described in connection with one exemplary embodiment or aspect may be combined with any other feature or element of any other embodiment or aspect described herein. Such modifications and variations are intended to be included within the scope of the present disclosure. Further, a person skilled in the art will recognize that terms commonly known to those skilled in the art may be used interchangeably herein.

The above embodiments and aspects are described in sufficient detail to enable those skilled in the art to practice what is claimed and it is to be understood that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first", "second", "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising", "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of' or "consists of' refers to a compound, composition, formulation, or method that excludes the presence of any additional elements, components, or method steps. The term "consisting of' also refers to a compound, composition, formulation, or method of the present disclosure that excludes the presence of any additional elements, components, or method steps.

The phrase "consisting essentially of' or "consists essentially of' refers to a composition, compound, formulation, or method that is inclusive of additional elements, components, or method steps that do not materially affect the characteristic(s) of the composition, compound, formulation, or method. The phrase "consisting essentially of' also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about", and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A fuel cell stack enclosure adapted to enclose a fuel cell stack, the fuel cell stack enclosure comprising:
an upper cover enclosing a first section of the fuel cell stack, the upper cover including an upper cover base and at least two upper faces extending downwardly away from the upper cover base,
a lower cover enclosing a second section of the fuel cell stack, the lower cover including a lower cover base and at least two lower faces extending upwardly away from the lower cover base, and
one or more clamping means configured to couple the upper cover to the lower cover to enclose the fuel cell stack so that the fuel cell stack is protected from contaminants outside the fuel cell stack enclosure.

2. The fuel cell stack enclosure of claim 1, wherein the one or more clamping means are a first clamping bar and a second clamping bar.

3. The fuel cell stack enclosure of claim 2, wherein the upper cover includes a first flanged feature attached to an edge of a first upper face of the at least two upper faces opposite an edge of the first upper face attached to the upper cover base and a second flanged feature attached to an edge of a second upper face of the at least two upper faces opposite an edge of the second upper face attached to the upper cover base, and
wherein the lower cover includes a third flanged feature attached to an edge of a first lower face of the at least two lower faces opposite an edge of the first lower face attached to the lower cover base and a fourth flanged feature attached to an edge of a second lower face of the at least two lower faces opposite an edge of the second lower face attached to the lower cover base.

4. The fuel cell stack enclosure of claim 3, wherein the first and the third flanged feature are coupled together with the first clamping bar and the second and the fourth flanged feature are coupled together with the second clamping bar.

5. The fuel cell stack enclosure of claim 4, wherein the fuel cell stack enclosure further comprises a first and second flange seal, and wherein the first flange seal is positioned between the first and the third flanged feature and the second flange seal is positioned between the second and the fourth flanged feature.

6. The fuel cell stack enclosure of claim 2, wherein at least one cap is attached to an end of one of the first clamping bar and the second clamping bar.

7. The fuel cell stack enclosure of claim 3, wherein the first clamping bar includes an opening sized to receive at least a portion of both the first flanged feature and the third flanged feature, and wherein the second clamping bar includes an opening sized to receive at least a portion of both the second flanged feature and the fourth flanged feature.

8. A method of enclosing a fuel cell stack comprising:
positioning an upper cover over a first section of the fuel cell stack, the upper cover including an upper cover base and at least two upper faces extending downwardly away from the upper cover base,
positioning a lower cover over a second section of the fuel cell stack, the lower cover including a lower cover base and at least two lower faces extending downwardly away from the lower cover base, and
sliding at least one clamping bar over a portion of the upper cover and a portion of the lower cover to couple the upper cover and the lower cover together.

9. The method of claim 8, wherein the upper cover comprises a first and a second flanged feature and the lower cover comprises a third and a fourth flanged feature.

10. The method of claim 9, further comprising securing the first and the third flanged features together with a first clamping bar of the at least one clamping bar and securing the second and the fourth flanged features together with a second clamping bar of the at least one clamping bar.

11. The method of claim 10, further comprising positioning a first flange seal between the first and the third flanged feature and a second flange seal between the second and the fourth flanged feature.

12. The method of claim 11, further comprising compressing the first flanged feature, the first flange seal, and the third flanged feature together with one of the at least one clamping bar.

13. The method of claim 12, further comprising compressing the second flanged feature, the second flange seal, and the fourth flanged feature together with another of the at least one clamping bar.

14. The method of claim 10, wherein the first flanged feature includes at least one horizontal face extending away from one of the at least two upper faces and at least one vertical face extending upwardly away from the at least one horizontal face, wherein the third flanged feature includes at least one horizontal face extending away from one of the at least two lower faces and at least one vertical face extending downwardly away from the at least one horizontal face, and wherein the first clamping bar includes an opening sized to receive the at least one vertical face of the first flanged feature and the at least one vertical face of the third flanged feature.

15. The method of claim 14, wherein the second flanged feature includes at least one horizontal face extending away from another of the at least two upper faces and at least one vertical face extending upwardly away from the at least one horizontal face, wherein the fourth flanged feature includes at least one horizontal face extending away from another of the at least two lower faces and at least one vertical face extending downwardly away from the at least one horizontal face, and wherein the second clamping bar includes an opening sized to receive the at least one vertical face of the second flanged feature and the at least one vertical face of the fourth flanged feature.
